# EUROPEAN PATENT APPLICATION

(11) **EP 2 611 201 A2**
(43) Date of publication of application: **03.07.2013**
(21) Application number: 12199472.7
(22) Date of filing: 27.12.2012
(51) Int. Cl.: H04N 21/458, H04N 21/262

(54) **Upgrading Apparatus, Display Apparatus, Control Method thereof and Display System**

(30) Priority: 28.12.2011 KR 20110144398; 28.12.2011 KR 20110144425; 04.06.2012 KR 20120059750
(71) Applicant: Samsung Electronics Co., Ltd, Gyeonggi-do 443-742 (KR)
(72) Inventor: KIM, Ki-suk, Suwon-si Gyeonggi-do (KR); NAM, Dae-hyun, Anyang-si Gyeonggi-do (KR); KA, Jee-hoon, Suwon-si Gyeonggi-do (KR); LEE, Sang-jun, Seongnam-si Gyeonggi-do (KR)
(74) Representative: Brandon, Paul Laurence

(57) **Abstract**

An upgrading apparatus, a display apparatus, a control method thereof, and a display system are provided. The upgrading apparatus for the display apparatus includes: an interface which is connected to the display apparatus and communicates with the display apparatus; a video processor which processes a video signal corresponding to an image displayed by the display apparatus; and a controller which controls the video processor to process the video signal to be displayed by the display apparatus when the upgrading apparatus is connected to the display apparatus through the interface, and controls the upgrading apparatus to operate based on information received from the display apparatus. Thus, the upgrading apparatus operates based on the information of the display apparatus, thereby securing compatibility with the previous-version display apparatus and enhancing the stability of the operation.

## Description

### BACKGROUND

### Field

Apparatuses and methods consistent with exemplary embodiments relate to an upgrading apparatus, a display apparatus, a control method thereof, and a display system, and more particularly, to an upgrading apparatus, a display apparatus, a control method thereof, and a display system, in which the upgrading apparatus is connected to the display apparatus to perform communication.

### Description of the Related Art

A display apparatus such as a television (TV) processes a video signal/video data received from various external video sources or stored therein, and displays the processed video signal/video data as an image on a display panel. Examples of the display apparatus given to a general user include a TV, a monitor, etc. For example, the TV applies various video processes such as decoding, scaling, etc., to a broadcasting signal received from the exterior, and thus provides an image of a broadcasting channel desired by a user.

The display apparatus includes a built-in video process board configured with circuits including various chipsets, memories, etc., to perform such a video process.

With various factors such as recent developments in technology, response to a user's demand, improvement in convenience, etc., there is a deepening and extending trend in the ability of the display apparatus. To enhance the function of the display apparatus, i.e., upgrade the display apparatus, hardware and software aspects may be taken into account.

However, in terms of hardware, it is not easy for a manufacturing aspect and a using aspect to upgrade the display apparatus because the built-in video process board of the display apparatus has to be fully or partially replaced by a physical method. Even in terms of software, a general user is burdened with making a new purchase of an upgraded display apparatus since hardware designed corresponding to upgraded software is needed to drive the upgraded software.

### SUMMARY

According to an aspect of an exemplary embodiment, there is provided an upgrading apparatus for a display apparatus, the upgrading apparatus including: an interface which is connected to the display apparatus for displaying an image and communicates with the display apparatus; a video processor which processes a video signal corresponding to an image displayed by the display apparatus; and a controller which controls the video processor to process the video signal to be displayed in the display apparatus if the upgrading apparatus is connected to the display apparatus through the interface, and controls the upgrading apparatus to operate based on information received from the display apparatus.

The interface may include a second interface which connects with a first interface of the display apparatus and communicates with the first interface, the information may include standard information of the first interface, and the controller may control the second interface to perform communication with the display apparatus through standards corresponding to the first interface if the upgrading apparatus is connected to the display apparatus through the second interface.

The controller may control at least one of configuration, voltage level and transmission speed of a signal transmitted and received through the second interface to correspond to the first interface.

The second interface may include: a static interface which receives standard information of the first interface; and a dynamic interface which communicates with the display apparatus through the standards corresponding to the first interface.

The controller may include a sub controller which controls the second interface to perform communication with the display apparatus through the standards corresponding to the first interface.

The sub controller may include an integrated circuit that includes at least one of a field-programmable gate array (FPGA) and a microcomputer.

The information may include power information of the display apparatus, and the controller may control the interface to receive the power information from the display apparatus, determine driving speed of the upgrading apparatus based on the received power information, and operate at the determined driving speed.

The controller may include a central processing unit (CPU), a graphic processing unit (GPU), a digital signal processor (DSP) and a memory, and may determine the driving speed of the upgrading apparatus based on a setting value of an adjusting item including at least one among frequency of the CPU, frequency of the GPU, frequency of the DSP, and bus speed of the memory.

The controller may determine the driving speed of the upgrading apparatus by adjusting the setting value of the adjusting item in accordance with operation modes of the display apparatus.

The operation modes of the display apparatus may include at least one of a TV mode, a game mode, an Internet mode, a sports mode, and a music mode.

The controller may set up the setting value of the adjusting items again if the operation mode of the display apparatus is changed.

The controller may compare the determined driving speed of the upgrading apparatus with the driving speed of the display apparatus, and as a result of the comparison, if the driving speed of the upgrading apparatus is equal to or lower than the driving speed of the display apparatus, the controller may perform operations.

The upgrading apparatus may further include a storage where information about the driving speed of the upgrading apparatus is stored corresponding to power information of the display apparatus, wherein the controller may determine driving speed stored corresponding to the received power information as the driving speed of the upgrading apparatus.

The power information may include power information that can be provided by the display apparatus to the upgrading apparatus, and the controller may control the interface to receive electric power corresponding to the power information from the display apparatus.

According to an aspect of another exemplary embodiment, there is provided a display apparatus including: an interface which communicates with an upgrading apparatus that processes a video signal received from at least one video source; a video processor which processes the received video signal; a display which displays an image based on the processed video signal; a controller which controls the interface to transmit information of the display apparatus and the video signal received from the video source to the upgrading apparatus and receive the processed video signal from the upgrading apparatus when connecting with the upgrading apparatus via the interface, and controls the display to display an image based on the processed video signal.

The controller may transmit standard information of the interface to the upgrading apparatus, and may control the interface to perform communication with the upgrading apparatus through standards corresponding to the interface.

The interface may transmit at least one of configuration, voltage level and transmission speed of a signal transmitted and received through the interface to the upgrading apparatus.

The controller may transmit power information of the display apparatus to the upgrading apparatus.

The interface receives information about driving speed of the upgrading apparatus, determined based on the power information of the display apparatus transmitted from the upgrading apparatus.

The driving speed of the upgrading apparatus may be determined based on a setting value of an adjusting item including at least one among frequency of a central processing unit (CPU), frequency of a graphic processing unit (GPU), frequency of a digital signal processor (DSP), and bus speed of a memory.

The driving speed of the upgrading apparatus may be determined by adjusting the setting value of the adjusting item in accordance with operation modes of the display apparatus, and the operation modes of the display apparatus may include at least one of a TV mode, a game mode, an Internet mode, a sports mode, and a music mode.

The controller may control the interface to receive information about the driving speed of the upgrading apparatus, determined by setting up the setting value of the adjusting items again, if the operation mode of the display apparatus is changed.

The controller may compare the determined driving speed of the upgrading apparatus with the driving speed of the display apparatus, and as a result of the comparison, if the driving speed of the upgrading apparatus is equal to or lower than the driving speed of the display apparatus, the controller performs operations.

The power information may include power information that can be provided by the display apparatus to the upgrading apparatus, and the controller may control the interface to supply electric power corresponding to the power information to the upgrading apparatus.

According to an aspect of another exemplary embodiment, there is provided a method of controlling an upgrading apparatus for a display apparatus, the method including: connecting an interface, which processes a video signal corresponding to an image displayed in the display apparatus, with the display apparatus; by the upgrading apparatus, receiving information of the display apparatus; by the upgrading apparatus, operating based on the received information, and receiving and processing the video signal from the display apparatus through an interface.

The information of the display apparatus may include standard information of a first interface of the display apparatus, and the method may further include: performing communication settings of a second interface of the upgrading apparatus so that communication with the display apparatus can be performed through standards corresponding to the first interface in accordance with the received standard information; and receiving the video signal from the display apparatus through the second interface.

The performing communication settings may include setting up at least one of configuration, voltage level and transmission speed of a signal transmitted to and received from the display apparatus to correspond to the first interface.

The second interface may include a static interface which receives standard information of the first interface; and a dynamic interface which communicates with the display apparatus through the standards corresponding to the first interface, and the performing communication settings may include performing the communication settings of the dynamic interface.

The upgrading apparatus may include a sub controller which controls the second interface to perform communication with the display apparatus through the standards corresponding to the first interface, and the sub controller may include an integrated circuit that includes at least one of a field-programmable gate array (FPGA) and a microcomputer.

The receiving the information of the display apparatus may include, by the upgrading apparatus, receiving power information of the display apparatus, and the method may further include: determining driving speed of the upgrading apparatus based on the received power information of the display apparatus; and controlling the upgrading apparatus to operate at the determined driving speed.

The determining the driving speed of the upgrading apparatus may include adjusting a setting value of an adjusting item including at least one among frequency of a central processing unit (CPU), frequency of a graphic processing unit (GPU), frequency of a digital signal processor (DSP), and bus speed of a memory.

The adjusting the setting value may include adjusting the setting value of the adjusting item in accordance with operation modes of the display apparatus, and the operation modes of the display apparatus may include at least one of a TV mode, a game mode, an Internet mode, a sports mode, and a music mode.

The adjusting the setting value may include setting up the setting value of the adjusting items again if the operation mode of the display apparatus is changed.

The method may further include: comparing the determined driving speed of the upgrading apparatus with the driving speed of the display apparatus; and controlling the controller to operate, as a result of the comparison, if the driving speed of the upgrading apparatus is equal to or lower than the driving speed of the display apparatus.

The method may further include: storing information about the driving speed of the upgrading apparatus corresponding to power information of the display apparatus, wherein the determining the driving speed of the upgrading apparatus may include determining the driving speed stored corresponding to the received power information as the driving speed of the upgrading apparatus.

The power information may include power information that can be provided by the display apparatus to the upgrading apparatus, and the method may further include: controlling the upgrading apparatus to receive electric power corresponding to the power information from the display apparatus.

According to an aspect of another exemplary embodiment, there is provided a method of controlling a display apparatus, the method including: connecting the display apparatus with an upgrading apparatus that processes a video signal received from at least one video source; transmitting information of the display apparatus to the upgrading apparatus; receiving the processed video signal from the upgrading apparatus; and displaying an image based on the received video signal.

The transmitting the information to the upgrading apparatus may include transmitting standard information of a first interface of the display apparatus to the upgrading apparatus, and the method may further include performing communication with the upgrading apparatus through standards corresponding to the first interface.

The performing the communication with the upgrading apparatus may include performing the communication to make at least one of configuration, voltage level and transmission speed of a signal transmitted and received through the first interface to correspond to the first interface.

The transmitting the information to the upgrading apparatus may include transmitting power information of the display apparatus to the upgrading apparatus, and the method may further include receiving information about driving speed of the upgrading apparatus, determined based on the power information of the display apparatus transmitted from the upgrading apparatus.

The driving speed of the upgrading apparatus may be determined based on a setting value of an adjusting item including at least one among frequency of a central processing unit (CPU), frequency of a graphic processing unit (GPU), frequency of a digital signal processor (DSP), and bus speed of a memory of the controller of the upgrading apparatus.

The driving speed of the upgrading apparatus may be determined by adjusting the setting value of the adjusting item in accordance with operation modes of the display apparatus, and the operation modes of the display apparatus may include at least one of a TV mode, a game mode, an Internet mode, a sports mode and a music mode.

The method may further include: receiving information about the driving speed of the upgrading apparatus, determined by setting up the setting value of the adjusting items again, if the operation mode of the display apparatus is changed.

The method may further include: comparing the determined driving speed of the upgrading apparatus with the driving speed of the display apparatus; and controlling the controller of the display apparatus to operate, as a result of the comparison, if the driving speed of the upgrading apparatus is equal to or lower than the driving speed of the display apparatus.

The power information may include power information that can be provided by the display apparatus to the upgrading apparatus, and the method may further include: supplying electric power corresponding to the power information to the upgrading apparatus.

According to an aspect of another exemplary embodiment, there is provided a display system including a display apparatus and an upgrading apparatus, the display apparatus including: a first interface which communicates with an upgrading apparatus that processes a video signal received from at least one video source; a first video processor which processes the received video signal; a display which displays an image based on the processed video signal; a first controller which controls the first interface to transmit information of the display apparatus to the upgrading apparatus when connecting with the upgrading apparatus through the interface and controls the display to display an image based on the processed video signal, and the upgrading apparatus including: a second interface which is connected to the first interface and communicates with the display apparatus; a second video processor which processes a video signal corresponding to an image displayed by the display apparatus; and a second controller which controls upgrading apparatus to operate based on information received from the display apparatus when connecting with the display apparatus through the second interface.

The information may include standard information of the first interface, and the second controller may control the second interface to perform communication with the display apparatus through standards corresponding to the first interface.

The information may include power information of the display apparatus, and the second controller may determine driving speed of the upgrading apparatus based on the received power information of the display apparatus, and operates at the determined driving speed.

According to an aspect of another exemplary embodiment, there is provided a method of controlling a display apparatus, the method including: connecting the display apparatus with an upgrading apparatus that processes a video signal received, by the display apparatus, from at least one video source and transmitted to the upgrading apparatus; and receiving the processed video signal from the upgrading apparatus according to information on the display apparatus obtained by the upgrading apparatus.

### BRIEF DESCRIPTION OF THE DRAWINGS

The above and/or other aspects will become apparent and more readily appreciated from the following description of exemplary embodiments, taken in conjunction with the accompanying drawings, in which:
FIG. 1 is a block diagram showing a configuration of a display system according to an exemplary embodiment;
FIG. 2 is a block diagram showing a configuration of a display apparatus and an upgrading apparatus according to a first exemplary embodiment;
FIG. 3 is a block diagram showing a configuration of a display apparatus and an upgrading apparatus according to a second exemplary embodiment;
FIG. 4 is a block diagram showing a configuration of a display apparatus and an upgrading apparatus according to a third exemplary embodiment;
FIGs. 5 and 6 are examples showing methods where a video process of the display apparatus is upgraded by the upgrading apparatus in the display system of FIGs. 1 to 4;
FIG. 7 is a flowchart of a control method of the display apparatus according to the first or second exemplary embodiment;
FIG. 8 is a flowchart of a control method of the upgrading apparatus according to the first or second exemplary embodiment;
FIGs. 9 and 10 are flowcharts of a control method of the display apparatus according to the third exemplary embodiment; and
FIGs. 11 and 12 are flowcharts of a control method of the upgrading apparatus according to the third exemplary embodiment.

### DETAILED DESCRIPTION OF EXEMPLARY EMBODIMENTS

Below, exemplary embodiments will be described in detail with reference to accompanying drawings.

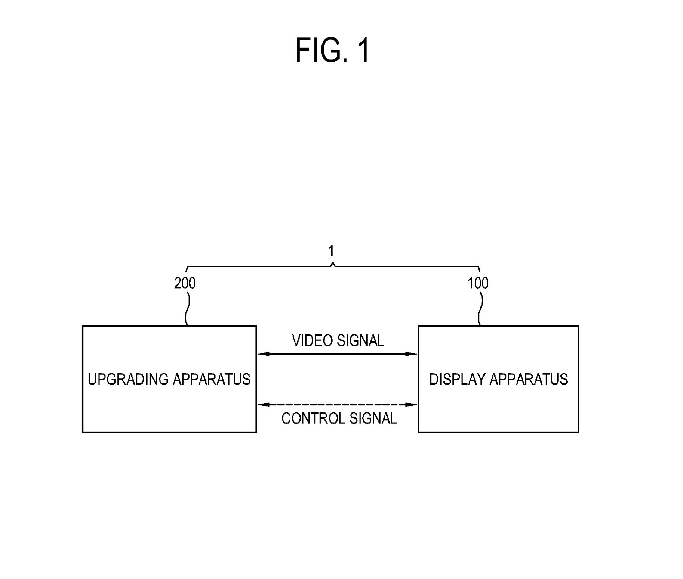

FIG. 1 is a block diagram showing a configuration of a display system 1 according to an exemplary embodiment.

As shown in FIG. 1, a display system 1 according to the present exemplary embodiment includes a display apparatus 100 and an upgrading apparatus 200. The display apparatus 100 and the upgrading apparatus 200 are connected to each other for communication.

The display apparatus 100 and the upgrading apparatus 200 connected to each other transmit and receive control signals including a video signal such as a broadcasting signal, various data, power, etc.

The display apparatus 100 processes the video signal provided from an external video source in accordance with a preset video process, and displays the processed video signal as an image.

With the system 1 according to the present exemplary embodiment, the display apparatus 100 is described as a television (TV) which displays a broadcasting image based on a broadcasting signal/broadcasting information/broadcasting data received from a transmitter of a broadcasting station. However, it is understood that one or more other exemplary embodiments are not limited to the TV as an example of the display apparatus 100. Alternatively, the display apparatus 100 may include various kinds of devices capable of displaying an image besides the TV, such as a monitor, or outputting an image, such as a set-top box or an audio/video receiver.

Also, the kinds of images displayable by the display apparatus 100 are not limited to the broadcasting image. For example, the display apparatus 100 may display an image such as a moving image, a still image, an application, an on-screen display (OSD), a graphic user interface (GUI) for controlling various operations, etc., based on a signal/data having various formats received from video sources.

The upgrading apparatus 200 is connected to the display apparatus 100 so that communication therebetween is possible. The upgrading apparatus 200 upgrades the existing hardware/software configuration of the connected display apparatus 100, so that the video signal can be processed by the hardware/software configuration of the upgraded display apparatus 100, thereby allowing the image to be displayed with more enhanced quality.

For instance, the upgrading apparatus 200 may be an apparatus for upgrading the hardware of the TV, such as a video process circuit or the like, and may be detachably connected to the display apparatus 100.

According to another exemplary embodiment, the upgrading apparatus 200 may be wirelessly connected to the display apparatus 100. In this case, the upgrading apparatus 200 may receive power from a separate external power source or a battery. However, in the present exemplary embodiment, the upgrading apparatus 200 is connected to the display apparatus 100 by a wire.

The display apparatus 100 may process the video signal received from the exterior in accordance with the preset video process, and display the processed video signal as an image.

According to the present exemplary embodiment, the upgrading apparatus 200 is connected to the display apparatus 100, and thus upgrades the hardware/software configuration of the display apparatus 100 performing the foregoing video process. The upgrading apparatus 200 receives and processes a video signal from the display apparatus 100, and transmits the processed video signal to the display apparatus 200. The display apparatus 100 displays an image based on the video signal received from the upgrading apparatus 200. Accordingly, an image with a relatively enhanced quality can be provided to a user.

In the present exemplary embodiment, if the upgrading apparatus 200 is connected to the display apparatus 100, the upgrading apparatus 200 performs operations based on information received from the display apparatus 100.

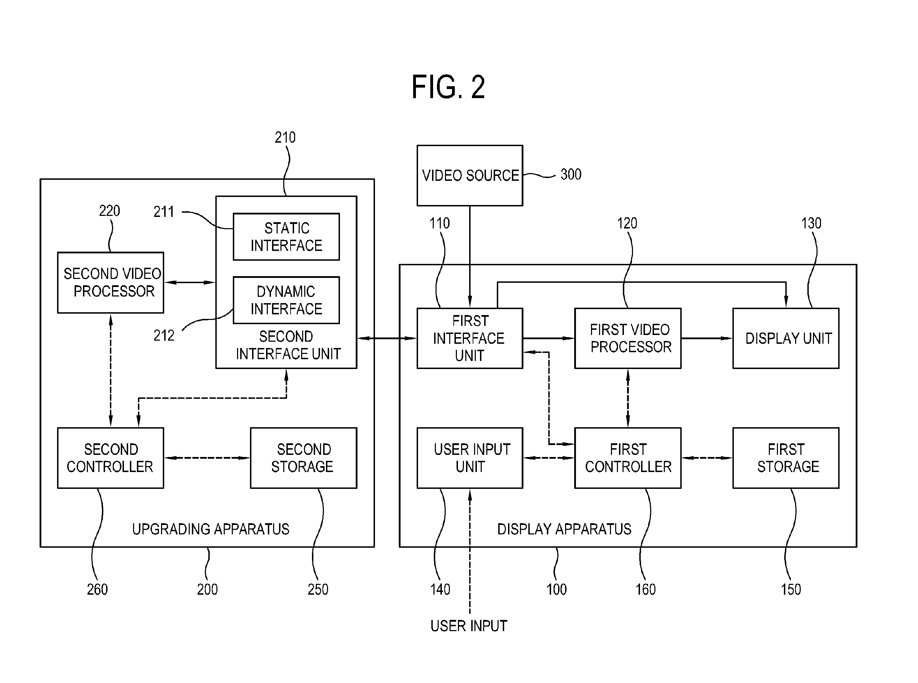

Here, the information received from the display apparatus 100 may include standard information of a first interface unit 110 (refer to FIGs. 2 to 4) (e.g., first interface) of the display apparatus 100, power information of the display apparatus 100, and operation mode information of the display apparatus 100, etc. The power information may be information about power to be supplied from the display apparatus 100 to the upgrading apparatus 200.

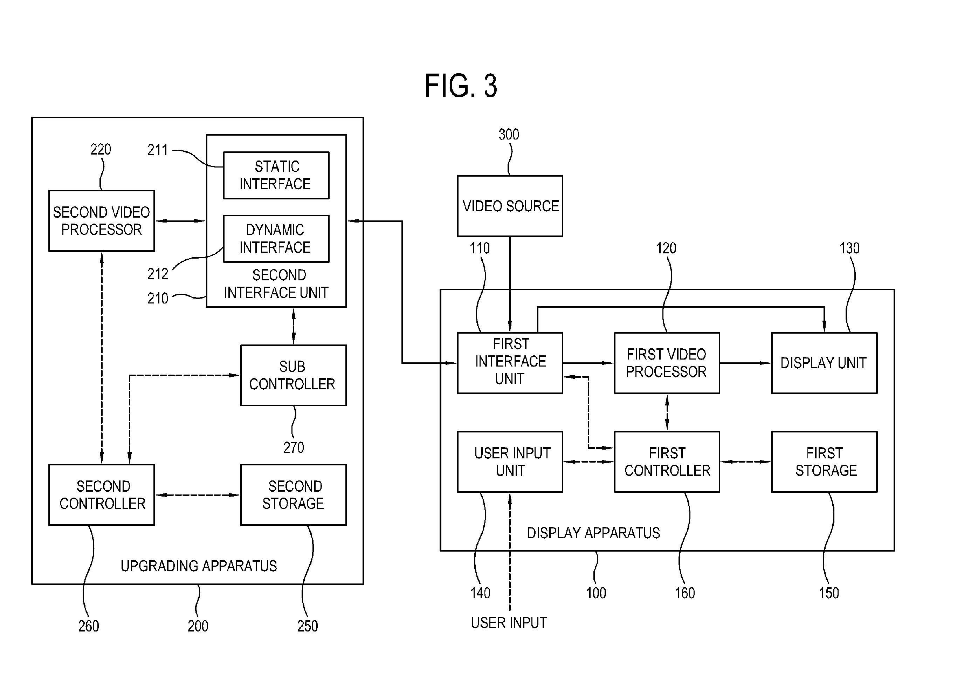

The upgrading apparatus 200 communicates with the display apparatus 100 by a standard corresponding to the first interface unit 110 through a second interface unit 210 (refer to FIGs. 2 to 4) (e.g., second interface) on the basis of the standard information of the first interface unit 110 received from the display apparatus 100. Relevant operations will be described in more detail with reference to FIGs. 2 and 3.

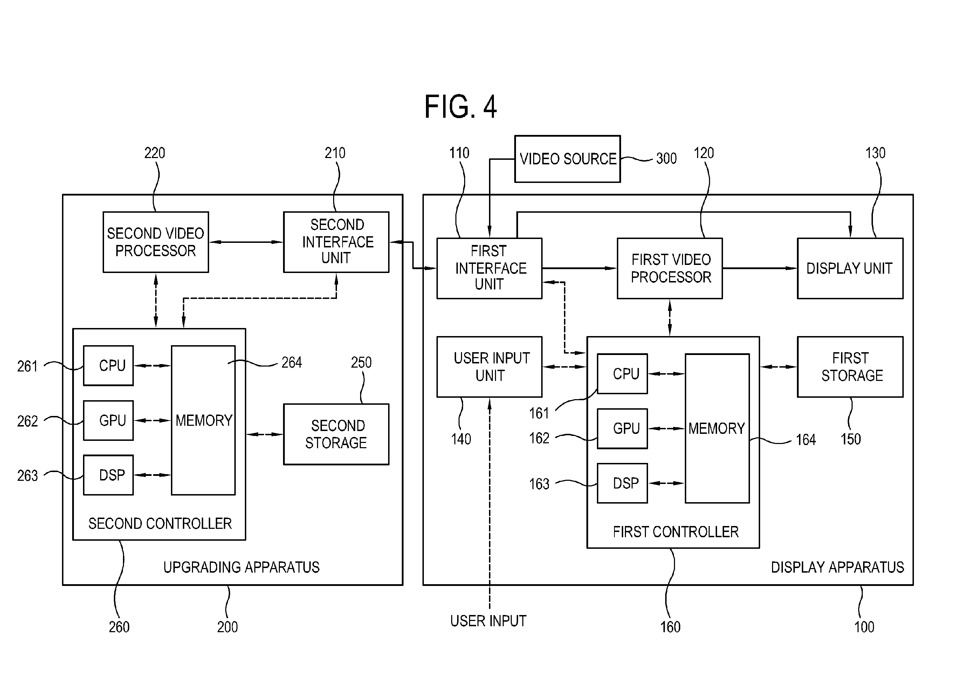

Also, the upgrading apparatus 200 determines a driving speed of the upgrading apparatus 200 based on the power information received from the display apparatus 100, and operates at the determined driving speed. Relevant operations will be described in more detail with reference to FIG. 4.

FIG. 2 is a block diagram showing a configuration of a display apparatus 100 and an upgrading apparatus 200 according to a first exemplary embodiment.

As shown in FIG. 2, the display apparatus 100 includes the first interface unit 110 to which at least one video source 300 is connected, a first video processor 120 for processing a video signal received from the video source 300 through the first interface unit 110, a display unit 130 (e.g., display) for displaying the video signal processed by the first video processor 120 as an image, a user input unit 140 (e.g., user inputter) for outputting a preset command in accordance with a user's input, a first storage 150 for storing non-limited data/information, and a first controller 160 for controlling operations of general configurations of the display apparatus 100.

The first interface unit 110 transmits a video signal received from at least one video source 300 to the first video processor 120. The first interface unit 110 has various types corresponding to the types of the video source 300 and the display apparatus 100 or formats of the received video signal. For example, the first interface unit 110 may receive signal/data by standards such as high definition multimedia interface (HDMI), universal serial bus (USB), component, etc., and may include a plurality of connectors corresponding to one or more of these standards. As various external devices such as the video source 300 are connected to these connectors, the communication using the first interface unit 110 is possible.

That is, the external device connected to the first interface unit 110 is not limited to the video source 300. Any device can be connected to the first interface unit 110 as long as the device can transmit/receive a signal/data to/from the display apparatus 100 through the first interface unit 110. According to the present exemplary embodiment, the upgrading apparatus 200 can be connected to the first interface unit 110.

The first video processor 120 performs various video processes previously set to a video signal received from the first interface unit 110. The first video processor 120 outputs the video signal processed by such processes to the display unit 130, thereby allowing the display unit 130 to display an image corresponding to the processed video signal.

There is no limit to the kind of video processes performed by the first video processor 120. For example, the video processes may include: de-multiplexing for dividing a predetermined signal into signals according to characteristics; decoding corresponding to a video format of a video signal; de-interlacing for converting an interlace type video signal into a progressive type video signal; scaling for adjusting a video signal in accordance with a preset resolution; noise reduction, detail enhancement and frame refresh rate conversion for improving picture quality, etc.

The first video processor 120 may be achieved by a video processing board that is a printed circuit board on which circuit components such as various chipsets for performing such processes, a memory, electronic parts, wiring, etc., are mounted.

The display unit 130 displays an image based on the video signal output from the first video processor 120. The display unit 130 may be achieved by various display types such as liquid crystal, plasma, light-emitting diode, organic light-emitting diode, surface-conduction electron emitter, carbon nano-tube, nano-crystal, etc., but not limited thereto.

According to types, the display unit 130 may further include an additional element. For example, if the display unit 130 is a liquid crystal type, the display unit 130 may include a liquid crystal display panel, a backlight unit emitting light toward the liquid crystal display panel, and a panel driving substrate for driving the liquid crystal display panel, but not limited thereto.

The user input unit 140 transmits preset various control commands or non-limited information to the first controller 160 in accordance with a user's manipulation and input. The user input unit 140 may be achieved by a menu key or input panel provided outside the display apparatus 100, a remote controller separated and remote from the display apparatus 100, etc.

Meanwhile, the user input unit 140 may be provided integrally with the display unit 130. For example, if the display unit 130 is a touch-screen, a user may send the first controller 160 a command previously set through an input menu provided in the display unit 130.

The first storage 150 stores the non-limited data under control of the first controller 160. The first storage 150 may be achieved by a flash-memory, a hard-disc drive, or the like nonvolatile storage medium. The first controller 160 accesses the first storage 150 and reads/records/modifies/deletes/updates the data.

The data stored in the first storage 150 may for example include not only an operating system for driving the display apparatus 100, but also various applications executable on the operating system, video data, appendix data, etc.

The first controller 160 performs control operations for various elements of the display apparatus 100. For example, the first controller 160 controls video processes of the first video processor 120 to proceed, signal/information/data to be transmitted and received through the first interface unit 110, and control operations to be performed in response to a command from the user input unit 140, thereby controlling general operations of the display apparatus 100.

As time goes by, the display apparatus 100 with this configuration may be upgraded due to various factors such as development of technology. There are many cases that warrant the update, such as where a video signal of a new format not proposed when manufacturing the display apparatus 100 is received, where a video signal having a resolution higher than that supported by the display apparatus 100 itself due to increasing trend toward demand for high image quality is received, where system load of the display apparatus 100 is to be decreased, and so on.

Such upgrade for the display apparatus 100 may be performed in view of hardware and software. According to the present exemplary embodiment, an upgrading apparatus 200 provided for upgrading the display apparatus 100 is connected to the first interface unit 110, so that at least one of the existing hardware and software configurations of the display apparatus 100 can be upgraded.

The upgrading apparatus 200 includes hardware/software configurations corresponding to at least some resources among the hardware/software resources the display apparatus 100 has. Such configurations included in the upgrading apparatus 200 are provided to perform, for example, more improved functions than those of the above at least some resources of the display apparatus 100. When connecting with the display apparatus 100, the upgrading apparatus 200 upgrades at least some of the existing resources of the display apparatus 100, thereby finally enhancing the quality of an image displayed on the display apparatus 100.

Below, the configuration of the upgrading apparatus 200 according to an exemplary embodiment will be described.

The upgrading apparatus 200 includes a second interface unit 210 to be connected to the first interface unit 110 of the display apparatus 100, a second video processor 220 for performing processes corresponding to at least a part of the video processes of the first video processor 120, a second storage 250 for storing non-limited data/information, and a second controller 260 for controlling general operations of the upgrading apparatus 200.

The second interface unit 210 is connected to the first interface unit 110 to thereby enable communication between the upgrading apparatus 200 and the display apparatus 100. The second interface unit 210 may be connected to at least one connection terminal among a plurality of connection terminals provided in the first interface unit 110.

For example, the second interface unit 210 may be respectively connected to a high definition multimedia interface (HDMI) terminal so that a video signal can be transmitted and received between the display apparatus 100 and the upgrading apparatus 200, and a universal serial bus (USB) terminal so that data and power can be transmitted and received between the display apparatus 100 and the upgrading apparatus 200, among the plurality of connection terminals of the first interface unit 110. However, this is just an example. Alternatively, there may be various connections between the first interface unit 110 and the second interface unit 210 besides the aforementioned connections.

The second interface unit 210 according to the first exemplary embodiment includes a static interface 211 and a dynamic interface 212.

The static interface 211 includes a universal interface such as a Universal Asynchronous Receiver/Transmitter (UART), an Inter-Integrated Circuit (I2C), a USB, a Component, etc., and is connected to the display apparatus 100 in order to receive standard information of the first interface unit 110 and power. Also, the static interface 211 may include an HDMI terminal for transmitting and receiving a video signal.

The dynamic interface 212 performs data communication with the display apparatus 200 through one or more standards corresponding to the first interface unit 110 on the basis of the received standard information under control of the second controller 260. Here, a data signal transmitted and received through the dynamic interface 212 corresponds to the standards of the first interface unit 110 with respect to at least one of configuration, a voltage level, transmission speed, etc. of a signal.

The dynamic interface 212 is an expanded communication interface using a physical configuration of the static interface 211. For example, if some of input/output pins of the second interface 210 are used as the static interface 211, the second controller 260 may use the other pins as the dynamic interface 212 by controlling the configuration, voltage level, transmission speed, etc., of the signal transmitted/received through the other pins.

In the first exemplary embodiment, the data signal is described as an example of a signal transmitted and received through the dynamic interface 212, although it is understood that one or more exemplary embodiments are not limited thereto. That is, not only the data signal, but also various information, a control signal, a video signal, and electric power may be transmitted and received through the dynamic interface 212.

Thus, the signal transmitted and received through the second interface unit 210 is dynamically controlled, so that compatibility with the display apparatus 100 can be secured even though a new interface is applied to the upgrading apparatus 200.

The second video processor 220 can perform a second process corresponding to the first process, with regard to at least a part of the first process implemented by the first video processor 120 in the display apparatus 100. The first and second processes are distinguished from each other just for convenience, and thus they may be one unit process or a plurality of unit processes. The second process may correspond to operations that are not capable of being performed by the first video processor 120. For example, the second process may be more improved in function than the first process, which is achieved by enhancing a chipset or the like hardware or by enhancing algorithm/execution code/program or the like software.

The second video processor 220 performs the second process, which replaces the first process, under control of the first controller 160 or the second controller 260 when the display apparatus 100 and the upgrading apparatus 200 are connected. Accordingly, the second process more improved in function than the first process is implemented instead of the first process in order to perform the video processes, thereby resulting in general improvement in the video processes, as will be described in detail below.

The second storage 250 stores non-limited data. The second storage 250 may be achieved by a non-volatile storage medium such as a flash memory, a hard disk drive, etc. The first controller 160 or the second controller 260 accesses the second storage 250, and reads/records/modifies/deletes/updates the data. Meanwhile, the first storage 150 may also be accessed by the second controller 260 as well as the first controller 160 according to materialization.

The second controller 260 performs control operations for various configurations of the upgrading apparatus 200 in order to perform the whole video processes. For example, the second controller 260 performs video processes to be implemented by the second video processor 220, and performs operations of transmitting and receiving a signal/information/data through the second interface unit 210, thereby controlling the whole operations of the upgrading apparatus 200.

The second controller 260 and the first controller 160 can be achieved by a central processing unit (CPU). If the second controller 260 can perform functions more improved than that of the first controller 160, the second controller 260 may disable the first controller 160 and control the whole operations of the display system 1 instead of the first controller 160. Alternatively, the second controller 260 together with the first controller 160 may control the whole operations of the display system 1.

FIG. 3 is a block diagram showing a configuration of a display apparatus 100 and an upgrading apparatus 200 of the display system 1 according to a second exemplary embodiment.

The display system 1 according to the second exemplary embodiment shown in FIG. 3 further includes a sub controller 270 for controlling the second interface unit 210 in addition to the upgrading apparatus 200 as compared with the display system 1 according to the first exemplary embodiment shown in FIG. 2. Therefore, elements other than the sub controller 270 have the same reference numerals and names as those of the first exemplary embodiment, and repetitive descriptions are omitted herein.

As shown in FIG. 3, the second interface unit 210 according to the second exemplary embodiment includes the static interface 211 and the dynamic interface 212 like those of the first exemplary embodiment.

The static interface 211 may be a universal interface such as a Universal Asynchronous Receiver/Transmitter (UART), an Inter-integrated Circuit (I2C), a Universal Serial Bus (USB), a component, etc., which is connected to the display apparatus 100 and receives standard information of the first interface unit 110 and power. Also, the static interface 211 may include a high definition multimedia interface (HDMI) for transmitting and receiving a video signal.

The dynamic interface 212 performs data communication with the display apparatus 100 through the standards corresponding to the first interface unit 110 based on the received standard information under control of the sub controller 270. Here, at least one among a signal configuration, a voltage level, a transmission speed of a data signal transmitted/received through the dynamic interface 212, etc., may correspond to the standards of the first interface.

The sub controller 270 may be achieved by a Field-Programmable Gate Array (FPGA), a microcomputer (MICOM), or the like Integrated Circuit(IC).

The dynamic interface 212 is an expanded communication interface using a physical configuration of the static interface 211. For example, if some of input/output pins of the second interface 210 are used as the static interface 211, the second controller 260 may use the other pins as the dynamic interface 212 by controlling the configuration, voltage level, transmission speed, etc., of the signal transmitted/received through the other pins.

In the second exemplary embodiment, the data signal is described as an example of the signal transmitted and received through the dynamic interface 212, although it is understood that one or more other exemplary embodiments are not limited thereto. Alternatively, various information, control signals, video signals, electric power, etc., as well as the data signal may be transmitted and received through the dynamic interface 212.

In the second exemplary embodiment, the sub controller 270 is separately provided for dynamically controlling such a signal transmitted and received through the second interface unit 210, so that the second controller 260 used as a main controller can be less burdened, and compatibility with the display apparatus 100 can be secured even though a new interface is applied to the upgrading apparatus 200.

FIG. 4 is a block diagram showing a configuration of a display apparatus 100 and an upgrading apparatus 200 of a display system 1 according to a third exemplary embodiment.

The display system 1 according to the third exemplary embodiment shown in FIG. 4 is different from the display system 1 according to the first exemplary embodiment shown in FIG. 2 in that the first controller 160 and the second controller 260 further include central processing units (CPU) 161, 261, graphic processing units (GPU) 162, 262 assisting the CPU 161, 261, digital signal processors (DSP) 163, 263, and memories 164, 264 such as a double data rate random access memory (DDR RAM).

Therefore, elements other than the CPU 161, 261, the GPU 162, 262, the DSP 163, 263, and the memories 164, 264 have the same reference numerals and names as those of the first exemplary embodiment, and repetitive descriptions are omitted herein.

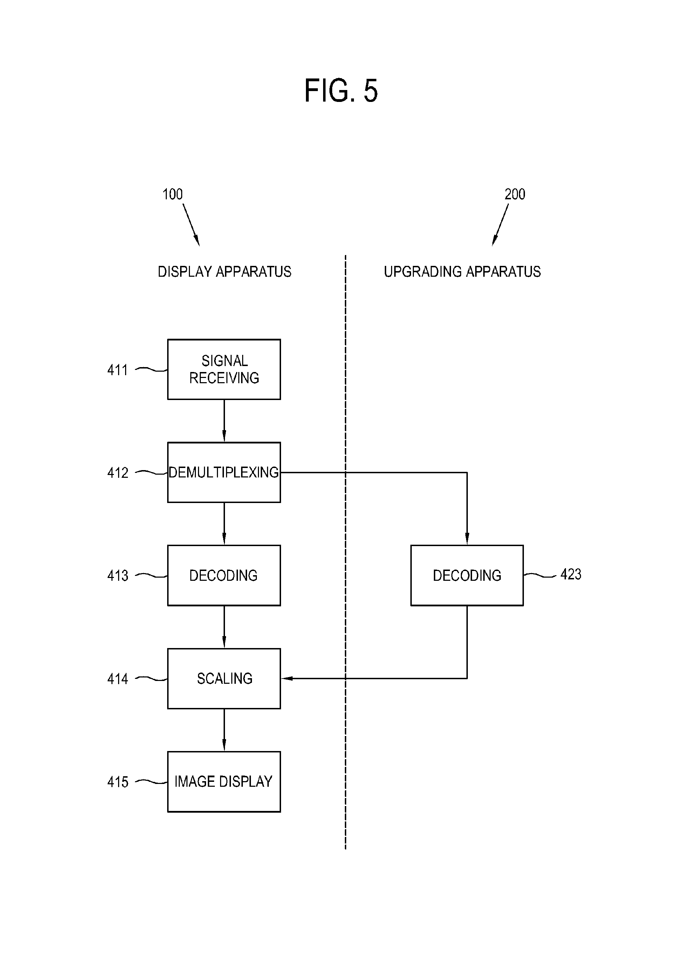

Below, detailed exemplary embodiments for upgrading the display apparatus 100 through the upgrading apparatus 200 will be described with reference to FIG. 5. FIG. 5 is a flowchart showing a method where a video process of the display apparatus 100 is upgraded by the upgrading apparatus 200 in the display system 1 according to an exemplary embodiment.

As shown in FIG. 5, the display apparatus 100 processes a predetermined signal, e.g., a broadcasting signal in accordance with video processes (operations 412, 413, and 414) of a preset sequence if receiving the broadcasting signal from the video source 300 (operation 411). The video processes 412, 413, 414 shown in the drawings are only exemplary, and do not correspond to all video processes to be practically implemented in the display apparatus 100

The display apparatus 100 performs demultiplexing for dividing a received broadcasting signal into a video signal, an audio signal, and additional data (operation 412). The display apparatus 100 processes each signal obtained by the demultiplexing. For example, the video signal is decoded to have a preset video format (operation 413). Further, the display apparatus 100 performs scaling of the decoded video signal to have a predetermined resolution so that the video signal can be displayed as an image on the display unit 130 (operation 414), and displays an image based on the video signal obtained by the scaling (operation 415).

Among such serial sequences, the upgrading apparatus 200 may be provided to perform a process (operation 423) corresponding to the decoding process (operation 413) of the display apparatus 100. The decoding process (operation 423) to be performed by the upgrading apparatus 200 may be the same or similar to the decoding process (operation 413) to be performed by the display apparatus 100, but more improved in function. Therefore, the video process can be enhanced by performing the decoding process (operation 423) of the upgrading apparatus 200 instead of the decoding process (operation 413) of the display apparatus 100.

For example, the decoding process (operation 423) of the upgrading apparatus 200 may process a video signal having a resolution that cannot be processed by the decoding process (operation 413) of the display apparatus 100, process a video signal having a format that cannot be processed by the decoding process (operation 413) of the display apparatus 100, or process a video signal with an additional effect that cannot be given by the decoding process (operation 413) of the display apparatus 100.

Thus, the sequence of the video processes according to an exemplary embodiment replaces the decoding process (operation 413) of the display apparatus 100 after the demultiplexing (operation 412) by the decoding process (operation 423) of the upgrading apparatus 200 under control of the first controller 160 or the second controller 260. After the decoding processing (operation 423) of the upgrading apparatus 200, the scaling (operation 414) is performed.

In accordance with such a sequence, a video signal and a control signal are transmitted and received between the display apparatus 100 and the upgrading apparatus 200, which is performed under control of the first controller 160 or the second controller 260.

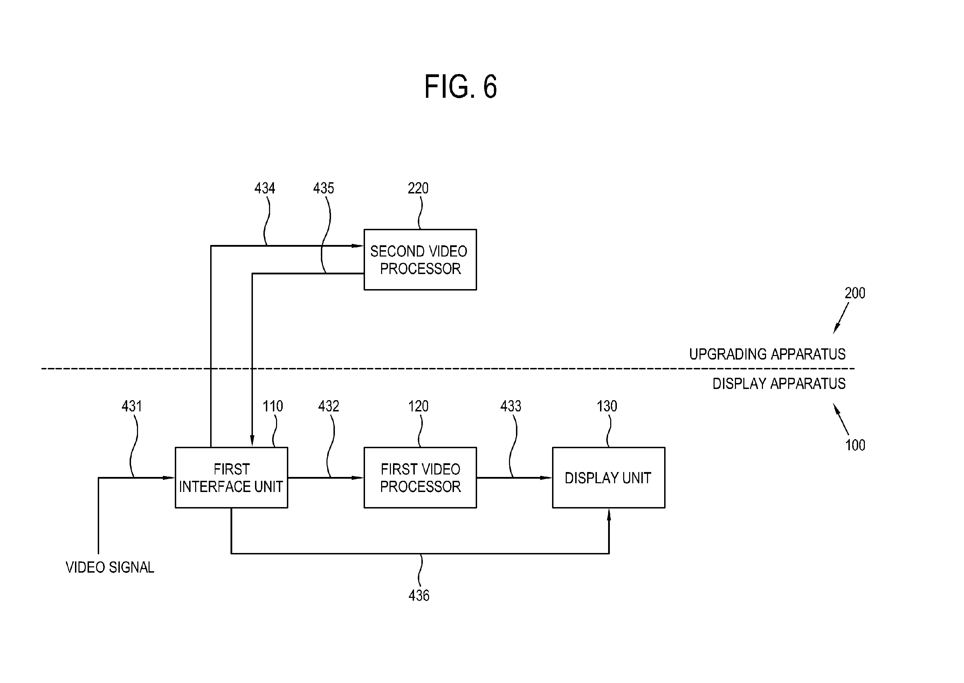

In contrast to the case of FIG. 5 where some processes among the video processes are replaced, the second video processor 220 may replace the first video processor 120 of the display apparatus 100. This will be described with reference to FIG. 6. FIG. 6 is a block diagram showing a process of transmitting a video signal received in the first interface unit 110 according to an exemplary embodiment.

Referring to FIG. 6, if the upgrading apparatus 200 is not connected to the display apparatus 100 or if the display apparatus 100 determines that a video signal received in the first interface unit 110 (operation 431) is able to be processed properly by the first video processor 120, the received video signal is transmitted to the first video processor 120 (operation 432). The first video processor 120 processes the video signal and outputs the processed video signal to the display unit 130 (operation 433). Thus, the display unit 130 displays an image based on the video signal processed by the first video processor 120.

On the other hand, as shown in FIG. 6, if the upgrading apparatus 200 is connected to the display apparatus 100, a video signal is received in the first interface unit 110 (operation 431) and transmitted to, not the first video processor 120, but the second video processor 220 (operation 434). Instead of the first video processor 120, the second video processor 220 performs the video process for the video signal. The video signal processed by the second video processor 220 is transmitted to the display apparatus 100 (operation 435).

The video signal bypasses the first video processor 120 and is transmitted to the display unit 130 (operation 436). Thus, the display unit 130 displays an image based on the video signal processed by the second video processor 220.

Meanwhile, when the display apparatus 100 and the upgrading apparatus 200 are connected, the second controller 260 may disable the first controller 160 and control the first video processor 120 and the second video processor 220. Alternatively, if a version of an operating system stored in the second storage 250 is higher than that stored in the first storage 150, the operating system of the first storage 150 may be updated with that stored in the second storage 250 and the updated operating system may be driven. Also, the operating system of the second storage 250 may be driven instead of the operating system of the first storage 150.

With this configuration, the upgrading apparatus 200 according to an exemplary embodiment may upgrade the display apparatus 100.

As described above, if the display apparatus 100 and the upgrading apparatus 200 are connected, the first controller 160 of the display apparatus 100 transmits its own information to the upgrading apparatus 200.

Specifically, the first controller 160 of the display apparatus 100 according to the first and second exemplary embodiments transmits standard information of the first interface unit 110 to the upgrading apparatus 200.

The upgrading apparatus 200 receives the standard information of the first interface unit 110 through the static interface 211 of the second interface unit 210, and the second controller 260 or the sub controller 270 sets up communication and controls the dynamic interface 212 of the second interface unit 210 so as to communicate with the display apparatus 100 through the standards corresponding to the received standard information.

In detail, the second controller 260 or the sub controller 270 may control at least one of the configuration, voltage level, and transmission speed of the signal transmitted and received through the dynamic interface 212 to correspond to the first interface unit 110.

Here, the second storage 250 may store a table where the standard information of various interfaces and values of the configuration, voltage level, and transmission speed of the signal corresponding to the respective standards, and the second controller 260 or the sub controller 270 may control the dynamic interface 212 by reading values corresponding to the first interface unit 110 from the table.

According to the first and second exemplary embodiments, the standards of the first interface unit 110 may include at least one of UART, I2C, USB, HDMI, etc.

Thus, even though a new interface is applied to the upgrading apparatus 200, the new interface supports the interface of the display apparatus 100 so that compatibility in the interface between the display apparatus 100 and the upgrading apparatus 200 can be secured.

Meanwhile, the first controller 160 of the display apparatus 100 according to the third exemplary embodiment transmits electric power information of the display apparatus 100 to the upgrading apparatus 200 via the first interface unit 110 if the display apparatus 100 and the upgrading apparatus 200 are connected.

The power information refers to information about electric power that can be supplied from the display apparatus 100 to the upgrading apparatus 200, and thus the upgrading apparatus 200 receives electric power corresponding to the power information from the display apparatus via the second interface unit 210.

The second interface unit 210 of the upgrading apparatus 200 is connected to a USB terminal of the first interface unit 110 provided in the display apparatus 100, and receives the power information and the electric power.

The second controller 260 of the upgrading apparatus 200 determines driving speed for the upgrading apparatus 200 on the basis of the power information of the display apparatus 100.

The second controller 260 adjusts a setting value of an adjusting item including at least one of a CPU frequency, a GPU frequency, a DSP frequency, a memory bus speed, etc., and thus determines a driving speed of the upgrading apparatus 200.

Here, the second controller 260 may adjust the setting value of the adjusting item in accordance with operation modes of the display apparatus 100. The operation modes of the display apparatus 100 may include a TV mode, a game mode, an Internet mode, a sports mode, a music mode, etc.

To this end, the first controller 160 of the display apparatus 100 controls the first interface unit 110 to further transmit information about the operation mode of the display apparatus 100 to the upgrading apparatus 200.

The second controller 260 controls the second interface unit 210 to receive the information about the operation mode from the display apparatus 100, and dynamically adjusts the setting value of each adjusting item so as to correspond to the received operation mode, thereby determining the driving speed of the upgrading apparatus 200. For example, in the game mode, the GPU frequency may be set to have a higher value than that of the TV mode or Internet mode.

The second storage 250 stores information about the driving speed corresponding to the power information of the display apparatus 100. When receiving the power information from the display apparatus 100, the second controller 260 reads the information about the driving speed of the upgrading apparatus 200 corresponding to the received power information and determines the driving speed of the upgrading apparatus 200.

The second controller 260 operates at the driving speed determined as above.

Also, the display apparatus 100 may be varied in its operation mode in accordance with a user's input or the like. If the operation mode of the display apparatus 100 is changed, the first controller 160 notifies the upgrading apparatus 200 of this change through the first interface unit 110, and thus the second controller 260 may reset the setting value of the adjusting item so as to correspond to the changed operation mode.

According to product specifications, the display apparatuses 100 may be different with respect to electric power to be supplied to the upgrading apparatus 200, and thus may not supply the electric power required by the upgrading apparatus 200 to the upgrading apparatus 200. In this case, the upgrading apparatus 200 may operate abnormally due to insufficient or excessive electric power supply.

Therefore, the upgrading apparatus 200 according to the third exemplary embodiment operates at an optimum driving speed corresponding to the power information of the display apparatus 100, so that both the display apparatus 100 and the upgrading apparatus 200 can operate stably.

Meanwhile, the second controller 260 may compare the driving speed of the upgrading apparatus 200, which is determined based on the power information, with the driving speed of the display apparatus 100. As a result of the comparison, if the driving speed of the upgrading apparatus 200 is equal to or lower than the driving speed of the display apparatus 100, the second controller 260 is disabled and the first controller 160 controls the whole operation of the display system 1 instead of the second controller 260.

In this case, the first controller 160 controls the first video processor 120 to process a video signal without transmitting the video signal to the upgrading apparatus 200, and controls the display unit 130 to display an image based on the video signal processed by the first video processor 120. Occasionally, the first controller 160 may control the second video processor 120 to process a video signal.

Also, if the driving speed of the upgrading apparatus 200 is equal to or lower than the driving speed of the display apparatus 100, some functions of the second controller 260 may be replaced by those of the first controller 160, so that both the first and second controllers 160 and 260 can operate to control the display system 1.

Accordingly, if all or some of the functions of the upgrading apparatus 200 are replaced by the display apparatus 100, the display system 1 can have stable operation and be increased in efficiency.

Below, a control method of the display system 1 according to an exemplary embodiment will be described with reference to the drawings.

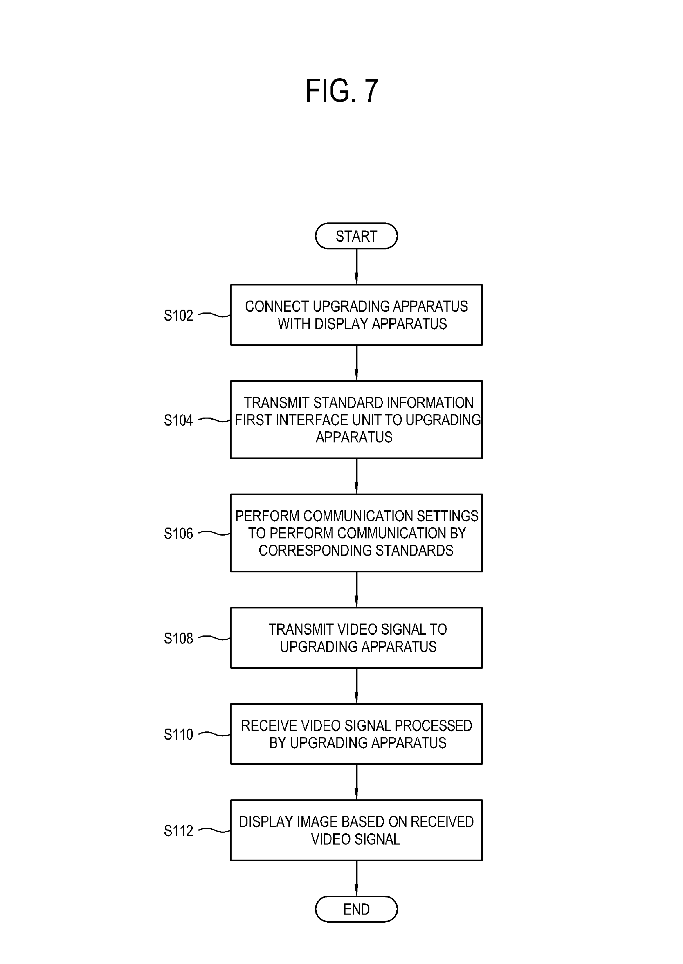

FIG. 7 is a flowchart of a control method of the display apparatus 100 according to the first or second exemplary embodiment.

As shown in FIG. 7, the upgrading apparatus 200 is connected to the first interface unit 110 of the display apparatus 100 for the purpose of upgrading hardware/software (operation S102).

If the upgrading apparatus 200 is connected, the first controller 160 controls the first interface unit 110 to transmit its own standard information as the information of the display apparatus 100 to the upgrading apparatus 200 (operation S104).

Then, the first controller 160 performs communication settings of the first interface unit 110 so that communication can be performed by the standards transmitted at operation S104 (operation S106).

Meanwhile, the first controller 160 controls the first interface unit 110 to transmit a video signal from a video source to the upgrading apparatus 200 (operation S108).

Further, the first controller 160 controls the first interface unit 110 to receive a video signal processed by the upgrading apparatus 200 (operation S110).

The first controller 160 controls the display unit 130 to display an image based on the video signal received at operation S110 (operation S112).

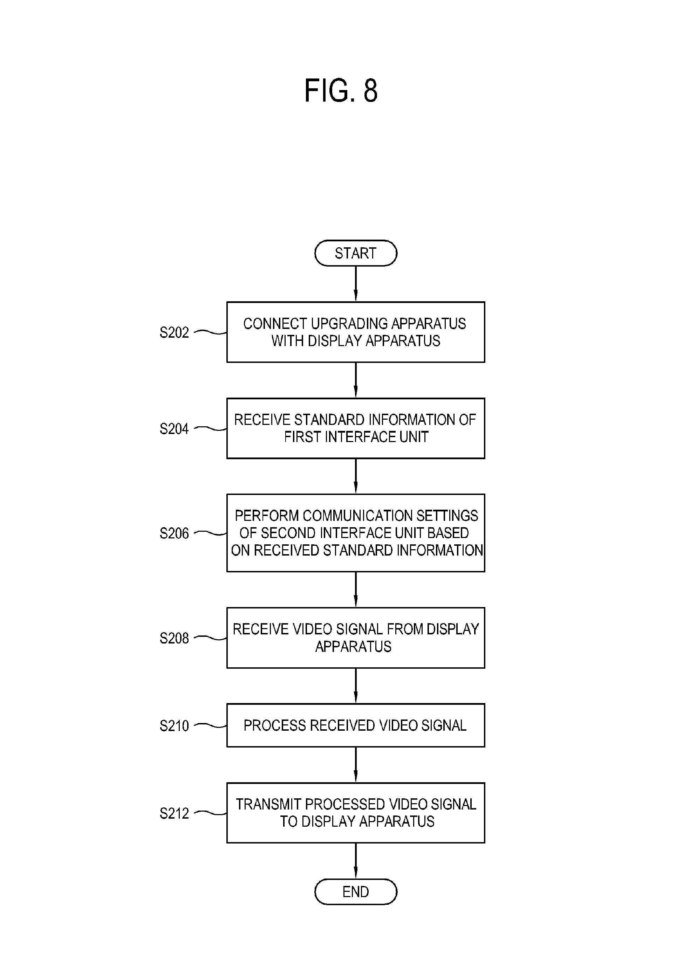

FIG. 8 is a flowchart of a control method of the upgrading apparatus 200 according to the first or second exemplary embodiment.

As shown in FIG. 8, the upgrading apparatus 200 is connected to the first interface unit 110 of the display apparatus 100 for the purpose of upgrading hardware/software (operation S202).

If the upgrading apparatus 200 is connected to the display apparatus 100, the second controller 260 receives the standard information of the first interface unit 110 as information of the display apparatus 100 through the static interface 211 of the second interface unit 210 (operation S204).

The second controller 260 or the sub controller 270 performs the communication settings for the dynamic interface 212 of the second interface unit 210 to have the standards corresponding to the first interface unit 110 on the basis of the standard information received at operation S204, and controls the dynamic interface 212 so that the communication can be performed according to the corresponding communication settings (operation S206). Here, the second controller 260 or the sub controller 270 controls at least one of the configuration, voltage level, and transmission speed of the signal transmitted/received through the dynamic interface unit 212 to correspond to the first interface unit 110. The signal transmitted and received through the dynamic interface unit 212 may be a data signal, but not limited thereto.

Furthermore, the upgrading apparatus 200 receives a video signal through the second interface unit 210 from the display apparatus 100 (operation S208). Here, the video signal may be received through the static interface 211 or the dynamic interface 212.

Next, the second controller 260 controls the second video processor 220 to process the video signal received at operation S208 (operation S210).

Further, the second controller 160 or the sub controller 270 controls the second interface unit 210 to transmit the processed video signal to the display apparatus 100 (operation S212).

Thus, according to the first and second exemplary embodiments, the upgrading apparatus 200 operates based on the information of the display apparatus 100, thereby securing compatibility with the previous-version display apparatus 100 and enhancing the stability of the operation.

For instance, even though a new interface is applied to the upgrading apparatus 200, backward compatibility with the interface of the previous display apparatus 100 can be secured and the function of the upgrading apparatus 200 can be expanded.

Further, the upgrading apparatus 200 separately includes the sub controller 270 for controlling the interface unit 210, so that the main controller 260 can be less burdened and compatibility with the interface 110 of the display apparatus 100 can be efficient.

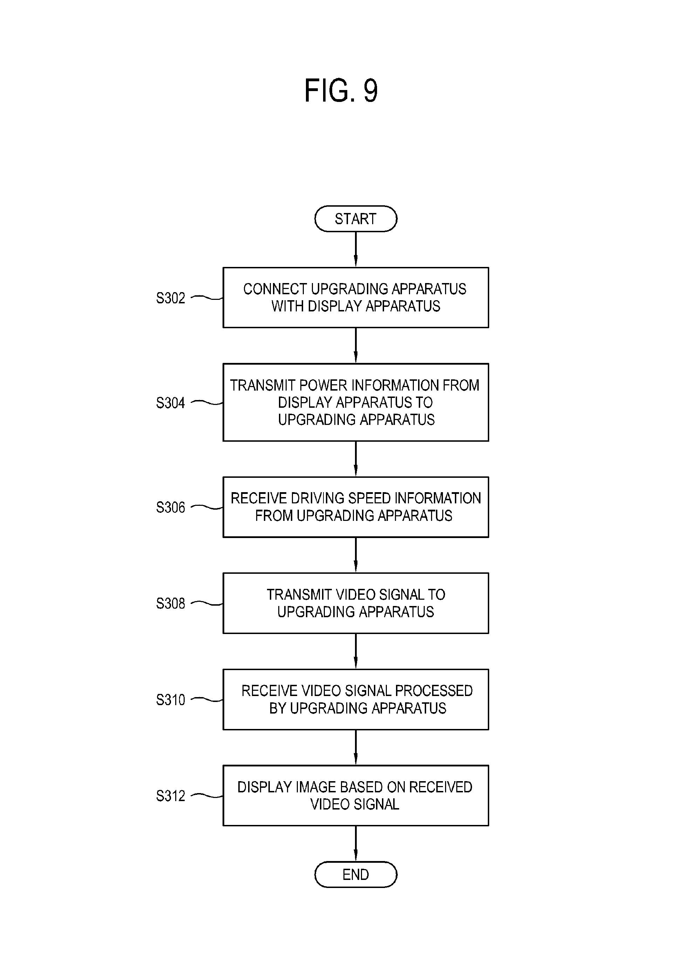

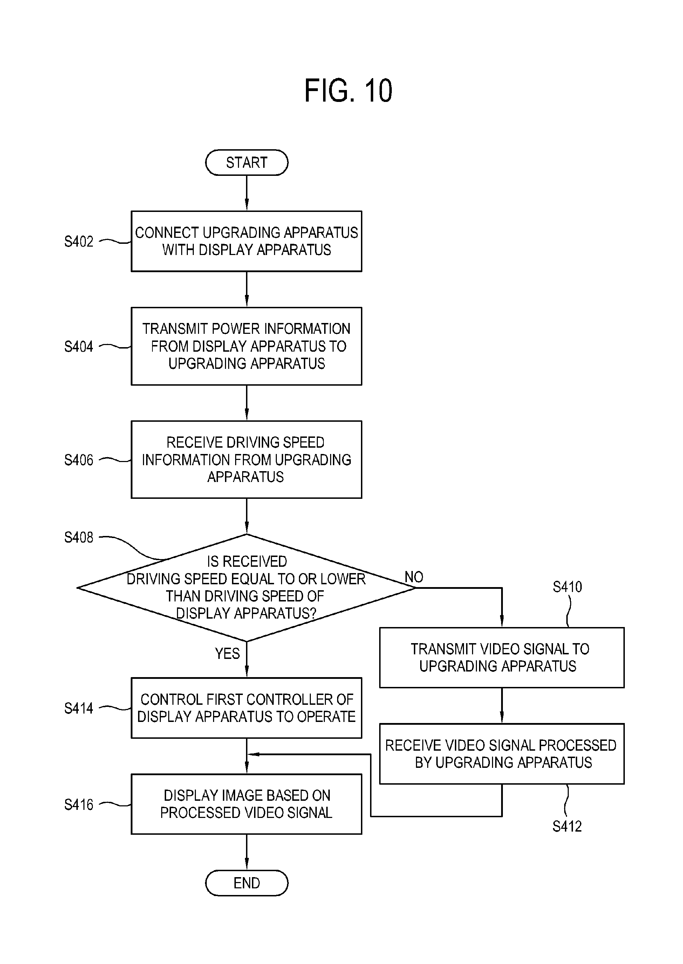

FIGs. 9 and 10 are flowcharts of a control method of the display apparatus 100 according to the third exemplary embodiment.

As shown in FIG. 9, the upgrading apparatus 200 is connected to the first interface unit 110 of the display apparatus 100 in order to upgrade hardware/software (operation S302).

When connecting with the upgrading apparatus 200, the first controller 160 transmits power information (i.e., information about power that can be supplied from the display apparatus 100 to the upgrading apparatus 200) as information of the display apparatus 100 to the upgrading apparatus 200 via the first interface unit 110 (operation S304).

The first controller 160 receives information about the driving speed of the upgrading apparatus 200, determined based on the power information transmitted at operation S304 (operation S306).

The first controller 160 controls the first interface unit 110 to transmit a video signal from a video source to the upgrading apparatus 200 if it is sensed that the upgrading apparatus 200 is connected at operation S302 (operation S308).

Further, the first controller 160 controls the first interface unit 110 to receive the video signal processed by the upgrading apparatus 200 (operation S310).

The first controller 160 controls the display unit 130 to display an image based on the video signal received at operation S310 (operation S312).

The exemplary embodiment shown in FIG. 10 is different from that shown in FIG. 9 in that the driving speed received from the upgrading apparatus 200 is compared with the driving speed of the display apparatus 100 in the exemplary embodiment of FIG. 10.

As shown in FIG. 10, the upgrading apparatus 200 is connected to the first interface unit 110 of the display apparatus 100 for the purpose of upgrading hardware/software (operation S402).

When connecting with the upgrading apparatus 200, the first controller 160 transmits power information of the display apparatus 100 to the upgrading apparatus 200 via the first interface unit 110 (operation S404).

The first controller 160 receives information about the driving speed of the upgrading apparatus, determined based on the power information transmitted at operation S404 (operation S406).

The first controller 160 compares the driving speed information received at operation S406 with the driving speed of the display apparatus 100 (operation S408).

As a result of the comparison at the operation S408, if the driving speed of the upgrading apparatus 200 is higher than the driving speed of the display apparatus 100, the first controller 160 controls the first interface unit 110 to transmit a video signal from the video source to the upgrading apparatus 200 (operation S410).

Further, the first controller 160 controls the first interface unit 110 to receive the video signal processed by the upgrading apparatus 200 (operation S412).

As a result of the comparison at operation S408, if the driving speed of the upgrading apparatus 200 is equal to or lower than the driving speed of the display apparatus 100, it may be determined that the performance of the second controller 260 is equal to or worse than that of the first controller 160. In this case, the second controller 260 is disabled and the first controller 160 operates (operation S414). Here, the first controller 160 controls the first video processor 120 or the second video processor 220 to perform video processes. In the case where the second video processor 220 performs the video process, operation S414 may include transmitting and receiving the video signal and control signal through the first and second interface units 110 and 120 under control of the first controller 160.

Further, the first controller 160 controls the display unit 130 to display an image corresponding to the video signal processed at operation S412 or S414 (operation S416).

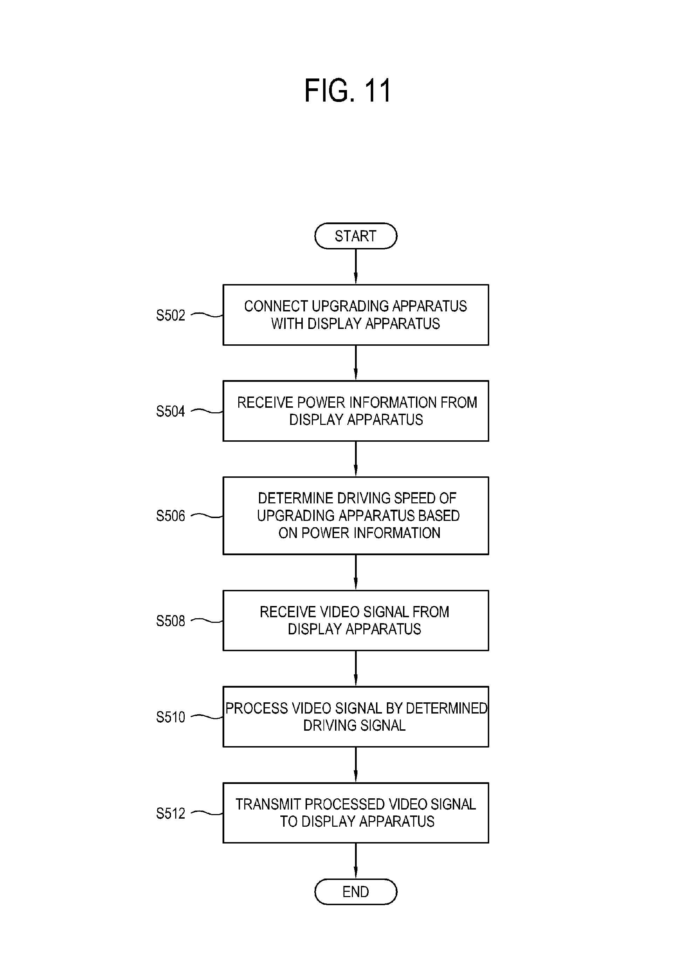

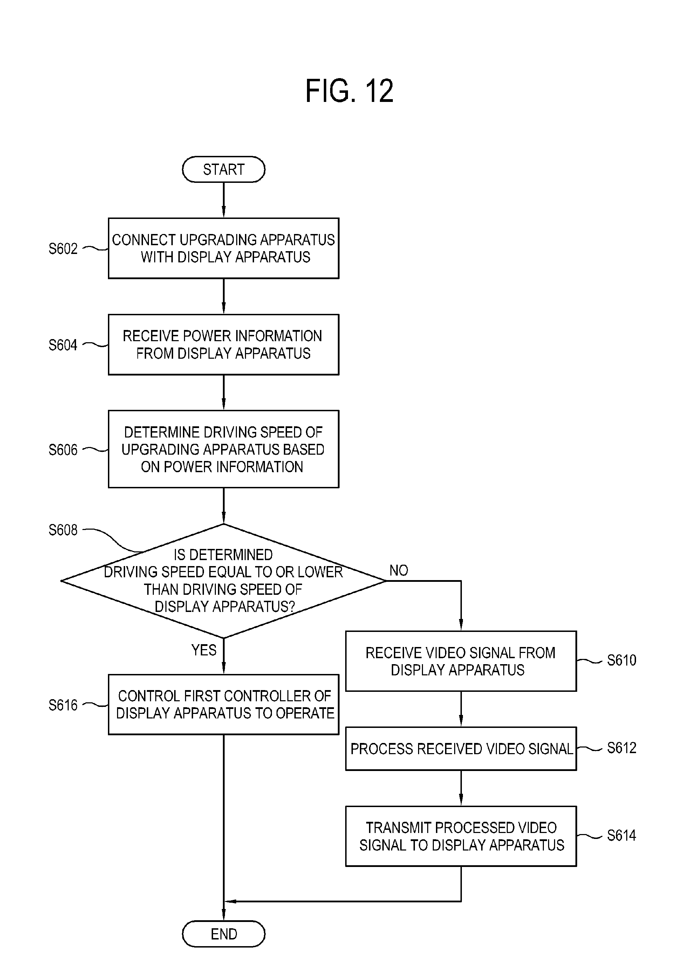

FIGs. 11 and 12 are flowcharts of a control method of the upgrading apparatus 200 according to the third exemplary embodiment.

As shown in FIG. 11, the upgrading apparatus 200 is connected to the first interface unit 110 of the display apparatus 100 for the purpose of upgrading hardware/software (operation S502).

When connecting with the display apparatus 100, the second controller 260 receives power information (i.e., information that can be provided by the display apparatus 100 to the upgrading apparatus 200) as information of the display apparatus 100 through the second interface unit 210 (operation S504).

The second controller 260 determines the driving speed of the upgrading apparatus 200 on the basis of the power information received at the operation S504 (operation S506). Here, the driving speed of the upgrading apparatus 200 may be determined by adjusting the setting value of the adjusting items such as the CPU frequency, the GPU frequency, the DSP frequency and the memory bus speed. Alternatively, the setting value of the adjusting item may be determined according to the operation modes of the display apparatus 100.

The second controller 260 operates at the driving speed determined at operation S506 and receives a video signal from the display apparatus 100 (operation S508)

Next, the second controller 260 controls the second video processor 220 to process the video signal received by operating at the driving speed determined at operation S506 (operation S510).

Further, the second controller 160 controls the second interface unit 210 to transmit the processed video signal to the display apparatus 100 (operation S512).

The exemplary embodiment shown in FIG. 12 is different from the exemplary embodiment shown in FIG. 11 in that the determined driving speed of the upgrading apparatus 200 is compared with the driving speed of the display apparatus 100 in the exemplary embodiment of FIG. 12.

As shown in FIG. 12, the upgrading apparatus 200 is connected to the first interface unit 110 of the display apparatus 100 for the purpose of hardware/software upgrade (operation S602).

When connecting with the display apparatus 100, the second controller 260 receives power information (i.e., information that can be provided by the display apparatus 100 to the upgrading apparatus 200) as information of the display apparatus 100 through the second interface unit 210 (operation S604).

The second controller 260 determines the driving speed of the upgrading apparatus 200 on the basis of the power information received at operation S604 (operation S606). Here, the driving speed of the upgrading apparatus 200 may be determined by adjusting the setting value of the adjusting items such as the CPU frequency, the GPU frequency, the DSP frequency, the memory bus speed, etc. Alternatively, the setting value of the adjusting item may be determined according to the operation modes of the display apparatus 100.

The second controller 160 compares the driving speed determined at operation S606 with the driving speed of the display apparatus 100 (operation S608)

As a result of the comparison at operation S608, if the driving speed of the upgrading apparatus 200 is higher than the driving speed of the display apparatus 100, the second controller 260 operates at the driving speed determined at operation S606 and receives the video signal from the display apparatus 100 (operation S61 0).

Next, the second controller 260 operates at the driving speed determined at operation S606, and controls the second video processor 220 to process the received video signal (operation S612).

Further, the second controller 260 controls the second interface unit 210 to transmit the processed video signal to the display apparatus 100 (operation S614).

As a result of the comparison at operation S608, if the driving speed of the upgrading apparatus 200 is equal to or lower than the driving speed of the display apparatus 100, it may be determined that the performance of the second controller 260 is equal to or worse than that of the first controller 160. In this case, a command may be given so that the second controller 260 can be disabled and the first controller 160 can operate (operation S616). Here, the second video processor 220 may perform video processes under control of the first controller 160. When the second video processor 220 performs the video processes, operation S616 may include operations of transmitting and receiving a video signal and a control signal through the first and second interface units 110 and 210 under control of the first controller 160.

As described above, according to the third exemplary embodiment, the upgrading apparatus 200 operates based on the information of the display apparatus 100, thereby securing compatibility with the previous-version display apparatus 100 and enhancing the stability of the operation.

Specifically, the upgrading apparatus 200 is driven at the speed optimized to the power information that can be provided by the display apparatus 100, so that the display apparatus 100 and the upgrading apparatus 200 can be prevented from error and improved in stability of operation.

Also, the driving speed is controlled by adjusting the setting values of the respective adjusting items in accordance with modes of the display apparatus 100, thereby enhancing a user's satisfaction and more efficiently controlling the driving speed.

Further, if the upgrading apparatus 200 has a performance equal to or worse than that of the display apparatus 100 in accordance with the determined driving speed, the controller 160 of the display apparatus 100 is operated to thereby increase the efficiency of the whole system.

While not restricted thereto, an exemplary embodiment can be embodied as computer-readable code on a computer-readable recording medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in a distributed fashion. Also, an exemplary embodiment may be written as a computer program transmitted over a computer-readable transmission medium, such as a carrier wave, and received and implemented in general-use or special-purpose digital computers that execute the programs. Moreover, it is understood that in exemplary embodiments, one or more units of the above-described apparatuses 100, 200 can include circuitry, a processor, a microprocessor, etc., and may execute a computer program stored in a computer-readable medium.

Although a few exemplary embodiments have been shown and described above, it will be appreciated by those skilled in the art that changes may be made in these exemplary embodiments without departing from the principles and spirit of the present inventive concept, the scope of which is defined in the appended claims and their equivalents.

## Claims

1. An upgrading apparatus for a display apparatus, the upgrading apparatus comprising:
an interface unit which is connected to the display apparatus for displaying an image and communicates with the display apparatus;
a video processor which processes a video signal corresponding to an image displayed by the display apparatus; and
a controller which controls the video processor to process the video signal to be displayed by the display apparatus when the upgrading apparatus is connected to the display apparatus through the interface unit, and controls the upgrading apparatus to operate based on information received from the display apparatus.

2. The upgrading apparatus according to claim 1, wherein the interface unit comprises a second interface unit which connects with a first interface unit of the display apparatus and communicates with the first interface unit,
the received information comprises standard information on a standard of the first interface unit, and
the controller controls the second interface unit to perform communication with the display apparatus through the standard of the first interface unit, according to the standard information, when the upgrading apparatus is connected to the display apparatus through the second interface unit.

3. The upgrading apparatus according to claim 2, wherein the second interface unit comprises a static interface which receives the standard information of the first interface unit; and a dynamic interface which communicates with the display apparatus through the standard of the first interface unit.

4. The upgrading apparatus according to claims 2 or 3, wherein the controller comprises a sub controller which controls the second interface unit to perform the communication with the display apparatus through the standard of the first interface unit.

5. The upgrading apparatus according to claim 1, wherein the received information comprises power information of the display apparatus, and
the controller controls the interface unit to receive the power information from the display apparatus, determines a driving speed of the upgrading apparatus based on the received power information, and operates at the determined driving speed.

6. The upgrading apparatus according to claim 5, wherein the controller compares the determined driving speed of the upgrading apparatus with a driving speed of the display apparatus, and as a result of the comparison, when the driving speed of the upgrading apparatus is determined to be equal to or lower than the driving speed of the display apparatus, the display apparatus controls operations of the video processor.

7. A display apparatus comprising:
an interface unit which communicates with an upgrading apparatus that processes a video signal received from at least one video source and transmitted to the upgrading apparatus;
a video processor which processes the received video signal;
a display unit which displays an image based on the processed video signal, processed by at least one of the upgrading apparatus and the video processor; and
a controller which controls the interface unit to transmit information of the display apparatus and the video signal received from the video source to the upgrading apparatus and receive the processed video signal from the upgrading apparatus when connected with the upgrading apparatus via the interface unit, and controls the display unit to display an image based on the processed video signal.

8. The display apparatus according to claim 7, wherein the controller transmits standard information on a standard of the interface unit to the upgrading apparatus, and controls the interface unit to perform communication with the upgrading apparatus through the standard of the interface unit.

9. The display apparatus according to claim 7 or 8, wherein the controller transmits power information of the display apparatus to the upgrading apparatus, and
wherein the interface unit receives, from the upgrading apparatus, information about a driving speed of the upgrading apparatus, determined based on the power information of the display apparatus.

10. A method of controlling an upgrading apparatus for a display apparatus, the method comprising:
connecting, to the display apparatus, an interface unit of the upgrading apparatus which processes a video signal corresponding to an image displayed by the display apparatus;
receiving, by the upgrading apparatus, information of the display apparatus;
operating, by the upgrading apparatus, based on the received information, and receiving and processing the video signal from the display apparatus through an interface.

11. The method according to claim 10, wherein the received information of the display apparatus comprises standard information on a standard of a first interface unit of the display apparatus, and
the method further comprises:
performing communication settings of a second interface unit of the upgrading apparatus so that communication with the display apparatus is performed, via the second interface, through the standardof to the first interface unit, according to the standard information; and
the video signal is received from the display apparatus through the second interface.

12. The method according to claim 10, wherein the receiving the information of the display apparatus comprises, receiving, by the upgrading apparatus, power information of the display apparatus, and
the operating based on the received information comprises:
determining a driving speed of the upgrading apparatus based on the received power information of the display apparatus; and
controlling the upgrading apparatus to operate at the determined driving speed.

13. A method of controlling a display apparatus, the method comprising:
connecting the display apparatus with an upgrading apparatus that processes a video signal received, by the display apparatus, from at least one video source and transmitted to the upgrading apparatus;
transmitting information of the display apparatus to the upgrading apparatus;
receiving the processed video signal from the upgrading apparatus; and
displaying an image based on the received video signal.

14. The method according to claim 13, wherein the transmitting the information to the upgrading apparatus comprises transmitting, to the upgrading apparatus, standard information on a standard of a first interface unit of the display apparatus, and
the method further comprises performing communication with the upgrading apparatus through the standard of the first interface unit.

15. The method according to claim 13, wherein the transmitting the information to the upgrading apparatus comprises transmitting power information of the display apparatus to the upgrading apparatus, and
the method further comprises receiving, from the upgrading apparatus, information about a driving speed of the upgrading apparatus, determined based on the power information of the display apparatus transmitted.
